# EUROPÄISCHE PATENTSCHRIFT

(11) **EP 2 018 740 B1**
(45) Veröffentlichungstag und Bekanntmachung des Hinweises auf die Patenterteilung: **06.07.2011**
(21) Anmeldenummer: 06742359.0
(22) Anmeldetag: 12.05.2006
(51) Int. Cl.: H04L 12/42, H04L 12/26

(54) **ANORDNUNG MIT EINEM FELDGERÄT UND EINER WANDLEREINRICHTUNG UND VERFAHREN ZU DEREN BETRIEB**
ARRANGEMENT WITH A FIELD DEVICE AND CONVERTER DEVICE AND METHOD FOR OPERATING THEM
ENSEMBLE POURVU D'UN APPAREIL DE TERRAIN ET D'UN TRANSFORMATEUR ET PROCÉDÉ PERMETTANT DE FAIRE FONCTIONNER LEDIT ENSEMBLE

(43) Veröffentlichungstag der Anmeldung: 28.01.2009
(73) Patentinhaber: SIEMENS AKTIENGESELLSCHAFT, 80333 München (DE)
(72) Erfinder: HOGA, Clemens, 90403 Nürnberg (DE); LANG, Gerhard, 14557 Wilhelmshorst (DE)
(86) Internationale Anmeldenummer: PCT/DE2006/000852
(87) Internationale Veröffentlichungsnummer: WO 2007/131462

(56) Entgegenhaltungen:
- WO-A1-2004/042482
- HOGA C ET AL: "IEC 61850: open communication in practice in substations" POWER SYSTEMS CONFERENCE AND EXPOSITION, 2004. IEEE PES NEW YORK CITY, NY, USA 10-13 OCT. 2004, PISCATAWAY, NJ, USA,IEEE, 10. Oktober 2004 (2004-10-10), Seiten 1531-1536, XP010787994 ISBN: 0-7803-8718-X
- HOGA C ET AL: "Utilities and industries gain benefits as IEC 61850-implementation gains speed" PES 2005 CONFERENCE AND EXPOSITION IN AFRICA, PROCEEDINGS OF THE INAUGURAL IEEE UNIVERSITY OF KWAZULU-NATAL, DURBAN, SOUTH AFRICA JULY 11-15, 2005, PISCATAWAY, NJ, USA,IEEE, 11. Juli 2005 (2005-07-11), Seiten 176-179, XP010904959 ISBN: 0-7803-9326-0

## Beschreibung

Die Erfindung bezieht sich auf ein Feldgerät, das zum Durchführen eines Gerätetests mit einer Testeinrichtung verbindbar ist, sowie eine Anordnung mit zumindest einem Feld-, insbesondere Schutzgerät, und mindestens einer mit dem Feldgerät in Verbindung stehenden Wandlereinrichtung, die zum Anschluss an eine Energieübertragungsleitung geeignet ist.

Schutzgeräte für Energieübertragungssysteme werden beispielsweise von der Siemens AG unter dem Produktnamen SIPROTEC vertrieben. Bei dem Schutzgerät SIPROTEC lässt sich die Arbeitsweise von außen über einen Netzwerk- bzw. Datenbus-Anschluss vor der Inbetriebnahme einstellen, indem eine Parametrierung des Gerätes vorgenommen wird. Während des Betriebs des Schutzgeräts werden digitale Abtastdaten in das Schutzgerät eingespeist und ausgewertet. Falls das Schutzgerät bei dieser Auswertung feststellt, dass die Abtastdaten einen Fehler anzeigen, wird ein Fehler- bzw. Alarmsignal erzeugt.

Aus der WO 2004/042482 A1 ist ein Verfahren zur Offline-Bedienung eines Feldgerätes bekannt, bei dem keine Kommunikation zwischen einem Bediengerät und dem Feldgerät besteht.

Aus der Veröffentlichung HOGA C ET AL: "IEC 61850: open communication in practice in substations" POWER SYSTEMS CONFERENCE AND EXPOSITION, 2004. IEEE PES NEW YORK CITY, NY, USA 10-13 OCT. 2004, PISCATAWAY, NJ, USA,IEEE, 10. Oktober 2004, Seiten 1531-1536, ISBN: 0-7803-8718-X, ist ein mit Strom- und Spannungswandlereinrichtungen über einen Datenübertragungsbus verbundenes Feldgerät bekannt.

Aus der Veröffentlichung HOGA C ET AL: "Utilities and industries gain benefits as IEC 61850-implementation gains speed" PES 2005 CONFERENCE AND EXPOSITION IN AFRICA, PROCEEDINGS OF THE INAUGURAL IEEE, UNIVERSITY OF KWAZULU-NATAL, DURBAN, SOUTH AFRICA JULY 11-15, 2005, PISCATAWAY, NJ, USA,IEEE, 11. Juli 2005, Seiten 176-179, ISBN: 0-7803-9326-0, ist ferner bekannt, dass gemäß des internationalen Standards IEC 61850 für Kommunikation in Schaltanlagen auch ein Test der angeschlossenen Geräte durchgeführt werden kann.

Der Erfindung liegt die Aufgabe zugrunde, ein Feldgerät sowie eine Anordnung der eingangs angegebenen Art dahingehend weiter zu entwickeln, dass sich das Feldgerät besonders einfach auf seine Funktionstüchtigkeit testen lässt.

Diese Aufgabe wird erfindungsgemäß durch die kennzeichnenden Merkmale des Anspruchs 1 gelöst. Vorteilhafte Ausgestaltungen der erfindungsgemäßen Anordnung sind in Unteransprüchen angegeben.

Danach ist erfindungsgemäß vorgesehen, dass das Feldgerät derart ausgestaltet ist, dass es für einen Gerätetest eine Kopie seiner Feldgeräteapplikation in Form einer Applikationskopie erzeugt und diese Applikationskopie in einem in dem Feldgerät enthaltenen Speicher abspeichert und dass während des Gerätetests der Feldgerätebetrieb weiterläuft.

Das Feldgerät ist also derart ausgestaltet, dass es im Testbetrieb eine Kopie seiner Feldgeräteapplikation - damit ist fachsprachlich die Software zur Steuerung der Funktion des Feldgerätes gemeint - in Form einer Applikationskopie erzeugt. Während des Gerätetests durch die Testeinrichtung kann dann der Feldgerätebetrieb unverändert aufrecht erhalten bleiben: Beispielsweise wird während des Gerätetests die Applikationskopie getestet; alternativ kann während des Gerätetests auch die Feldgeräteapplikation getestet werden, wobei der Feldgerätebetrieb in diesem Fall auf der Basis der Applikationskopie weitergeführt wird.

Besonders bevorzugt ist das Feldgerät derart ausgestaltet, dass es zwischen der Feldgeräteapplikation und der Applikationskopie hin- und herschalten kann, um eine Überprüfung sowohl der Feldgeräteapplikation als auch der Applikationskopie zu ermöglichen. In diesem Falle erfolgt die Aufrechterhaltung des Feldgerätebetriebs also zeitweise auf der Basis der Applikationskopie und zeitweise auf der Basis der Feldgeräteapplikation; in entsprechender Weise wird zeitweise die Feldgeräteapplikation und zeitweise die Applikationskopie getestet, und zwar beispielsweise solange, bis sowohl die Feldgeräteapplikation als auch die Applikationskopie vollständig getestet worden sind.

Vorzugsweise erfolgt das Hin- und Herschalten zwischen der Feldgeräteapplikation und der Applikationskopie für den Geräte- und Testbetrieb "on the fly", also unterbrechungsfrei, so dass ein vollständiger und auch wiederholter Gerätetest während des normalen Gerätebetriebs möglich ist.

Die genannte Aufgabe wird auch durch eine Anordnung gemäß Anspruch 6 gelöst.

Danach ist vorgesehen, dass das Feldgerät gemäß einem der Ansprüche 1 bis 5 ausgebildet ist und das Feldgerät und die Wandlereinrichtung über einen geschlossenen Datenübertragungsring verbunden sind.

Ein wesentlicher Vorteil der erfindungsgemäßen Anordnung ist darin zu sehen, dass sich das Feldgerät innerhalb der Anordnung testen lässt, ohne dass eine Unterbrechung der Datenkommunikation zwischen dem Feldgerät und der Wandlereinrichtung auftritt. Aufgrund des erfindungsgemäß vorgesehenen Datenübertragungsringes lässt sich nämlich gewährleisten, dass sich eine Testeinrichtung von außen an die Anordnung und damit an das Feldgerät anschließen lässt, ohne dass die Datenverbindung zwischen dem Feldgerät und der Wandlereinrichtung hierzu aufgetrennt werden muss. Ein Datenübertragungsring weist nämlich aufgrund seiner Ringstruktur stets zwei Datenübertragungszweige zwischen dem Feldgerät und der Wandlereinrichtung auf, so dass einer der beiden Datenübertragungszweige aufgetrennt werden kann, um eine Testeinrichtung an den Datenübertragungsring anzuschließen; die Datenverbindung zwischen dem Feldgerät und der Wandlereinrichtung bleibt dabei dennoch aufrechterhalten, denn für die Verbindung zwischen dem Feldgerät und der Wandlereinrichtung verbleibt noch der jeweils andere Datenübertragungszweig. Zusammengefasst ermöglicht die erfindungsgemäß vorgesehene ringförmige und damit redundante Verbindung zwischen dem Feldgerät und der Wandlereinrichtung also den Anschluss einer Testeinrichtung während des laufenden Betriebs der Anordnung, ohne dass eine Abschaltung der Geräte erfolgen oder eine Unterbrechung der Datenverbindung hingenommen werden muss.

Um zu erreichen, dass ein Anschluss einer Testeinrichtung an den Datenübertragungsring besonders schnell und einfach möglich ist, wird es als vorteilhaft angesehen, wenn an den Datenübertragungsring eine zusätzliche Schalteinrichtung angeschlossen ist, die als Schnittstelle zum Anschluss einer Testeinrichtung geeignet und entsprechend verwendbar ist.

Im Hinblick auf besonders hohe Datenübertragungsraten wird es als vorteilhaft angesehen, wenn der Datenübertragungsring durch einen optisch arbeitenden Ring gebildet ist; denn optisch arbeitende Datenübertragungsringe ermöglichen die Übertragung von Datenpaketen bis in den Gigabitbereich hinein.

Vorzugsweise handelt es sich bei dem Datenübertragungsring um einen Ethernet-Ring, so dass auf die im Bereich der Datenübertragungstechnik bekannte Ethernet-Technologie zurückgegriffen werden kann. Beispielsweise wird zur Übertragung von Kommunikationsprotokollen der IEC61850-Standard eingesetzt, vorzugsweise auf der Basis des Real-Time-Ethernet-Verfahrens und des IEC61784-2-Standards. Besonders bevorzugt arbeitet der Datenübertragungsring in sogenannter Echtzeit, beispielsweise auf der Basis des Profinet-i_RTE-Standards.

Die bereits erwähnte Schalteinrichtung als zusätzlicher Bestandteil des Datenübertragungsringes wird vorzugsweise durch einen Ethernet-Schalter in Form eines 3-Port-Schalters gebildet, wie er beispielsweise in der deutschen Offenlegungsschrift DE 102 60 806 A1 beschrieben ist. Bevorzugt werden derartige 3-Port-Schalter durch monolithisch integrierte Komponenten, insbesondere in FPGA- oder ASIC-Bauweise, gebildet. Wenn eine zusätzliche Schalteinrichtung zum Anschluss einer Testeinrichtung eingespart werden soll, kann die Testeinrichtung auch unmittelbar an den Datenübertragungsring angeschlossen werden; denn - wie eingangs bereits erläutert - kann der Datenübertragungsring zum Anschluss der Testeinrichtung aufgetrennt werden, ohne dass es zu einem Datenverlust kommen kann, da stets ein Übertragungszweig des Datenübertragungsringes zur Kommunikation erhalten bleibt.

Im Übrigen ist es auch möglich, die Testeinrichtung in der Wandlereinrichtung unterzubringen, um mit der Wandlereinrichtung einen Test des Feldgerätes durchführen zu können.

Die Erfindung bezieht sich darüber hinaus auf ein Verfahren zum Testen eines Feldgerätes, das in einer Anordnung - wie eingangs beschrieben - angeordnet ist.

Erfindungsgemäß ist diesbezüglich vorgesehen, dass mit einer an den Datenübertragungsring angeschlossenen Testeinrichtung Testsequenzen erzeugt und über den Datenübertragungsring zu dem Feldgerät übertragen werden.

Vorteilhafte Ausgestaltungen des erfindungsgemäßen Verfahrens sind in Unteransprüchen angegeben.

Bezüglich der Vorteile des erfindungsgemäßen Verfahrens sei auf die obigen Ausführungen im Zusammenhang mit der erfindungsgemäßen Anordnung verwiesen.

Konkret wird somit ein Feldgerät derart ausgestaltet, dass es zum Testbetrieb eine Kopie seiner Feldgeräteapplikation in Form einer Applikationskopie erzeugt und während des Gerätetests durch eine Testeinrichtung den Feldgerätebetrieb weiter aufrecht erhält, sei es auf der Basis der Feldgeräteapplikation oder auf der Basis der Applikationskopie. Diese Ausgestaltung des Feldgerätes wird somit unabhängig davon als Erfindung angesehen, ob das Feldgerät über einen geschlossenen Datenübertragungsring oder auf eine andere, beispielsweise vorbekannte, Weise mit einer Wandlereinrichtung verbunden ist oder nicht.

Auch ein Testverfahren, bei dem ein Feldgerät während seines Betriebs getestet wird, indem auf eine Applikationskopie, sei es für den Testbetrieb oder für den Gerätebetrieb, zurückgegriffen wird, wird als selbständige Erfindung angesehen, und zwar unabhängig davon, ob das Feldgerät über einen geschlossenen Datenübertragungsring oder auf eine andere, beispielsweise vorbekannte, Weise mit einer Wandlereinrichtung verbunden ist oder nicht.

Die Erfindung wird nachfolgend anhand von Ausführungsbeispielen näher erläutert; dabei zeigen beispielhaft
- Figur 1: ein Ausführungsbeispiel für eine erfindungsgemäße Anordnung, bei der eine Testeinrichtung über eine zusätzliche Schalteinrichtung an einen Datenüber- tragungsring angeschlossen ist,
- Figur 2: ein zweites Ausführungsbeispiel für eine erfindungsgemäße Anordnung, bei der eine Testein- richtung unmittelbar an einen Datenübertragungsring angeschlossen ist und
- Figur 3: ein drittes Ausführungsbeispiel für eine erfindungsgemäße Anordnung, bei der eine Testein- richtung zum Testen eines Feldgerätes in einer Wandlereinrichtung enthalten ist.

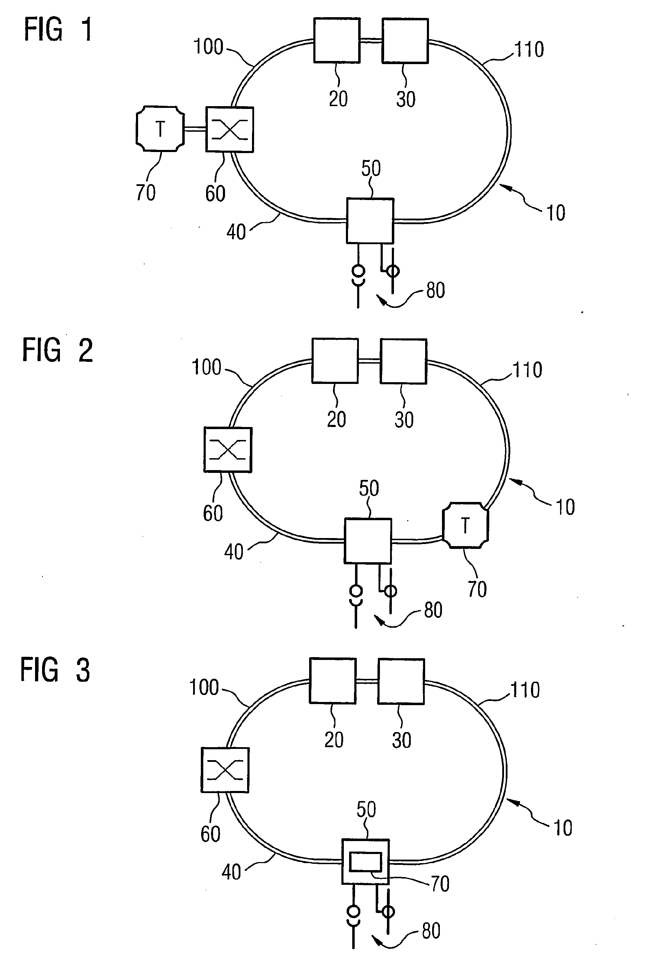

In den Figuren 1 bis 3 werden der Übersichtlichkeit halber für identische oder vergleichbare Komponenten stets dieselben Bezugszeichen verwendet.

In der Figur 1 erkennt man eine Anordnung 10 mit einem Schutzgerät 20 sowie einem Feldleitgerät 30, die über einen geschlossenen Datenübertragungsring 40 in Form eines Echtzeit-Ethernet-Rings sowohl miteinander als auch mit einer Wandlereinrichtung 50 verbunden sind.

Außerdem ist an den Datenübertragungsring 40 eine zusätzliche Schalteinrichtung 60 angeschlossen, bei der es sich um einen Ethernet-Schalter in Form eines 3-Port-Schalters handelt. Der Ethernet-Schalter 60 kann beispielsweise durch einen 3-Port-Schalter gebildet sein, wie er in der deutschen Offenlegungsschrift DE 102 60 806 A1 beschrieben ist.

In der Figur 1 lässt sich darüber hinaus erkennen, dass an den Ethernet-Schalter 60 eine Testeinrichtung 70 angeschlossen werden kann, mit der sich das Schutzgerät 20 oder das Feldleitgerät 30 testen lässt. Nachfolgend wird beispielhaft davon ausgegangen, dass das Schutzgerät 20 einem Test unterzogen werden soll.

An die Wandlereinrichtung 50 sind Strom- und Spannungswandler angeschlossen, die mit dem Bezugszeichen 80 bezeichnet sind. Diese Strom- und Spannungswandler 80 stehen mit einer aus Gründen der Übersichtlichkeit in der Figur 1 nicht weiter dargestellten Energieübertragungsleitung in Verbindung und erfassen Strom- und Spannungswerte, die von der Wandlereinrichtung 50 erfasst und in Form von Ethernet-Datenpakten zu dem Schutzgerät 20 bzw. Feldleitgerät 30 übermittelt werden.

Die Anordnung 10 gemäß Figur 1 lässt sich beispielsweise wie folgt betreiben:

Soll das Schutzgerät 20 einem Gerätetest unterzogen werden, so wird die Testeinrichtung 70 beispielsweise an den Ethernet-Schalter 60 angeschlossen, ohne dass es zu einer Unterbrechung der Datenverbindung zwischen dem Schutzgerät 20 und der Wandlereinrichtung 50 kommt. Eine Datenunterbrechung ist deshalb ausgeschlossen, weil der Ethernetschalter 60 bereits Bestandteil des Datenübertragungsrings 40 ist, sowie auch deshalb, weil der Datenübertragungsring 40 zwischen dem Schutzgerät 20 und der Wandlereinrichtung 50 insgesamt zwei Übertragungszweige aufweist, nämlich einen ersten in der Figur 1 linken Übertragungszweig 100 sowie einen in der Figur 1 rechten Übertragungszweig 110. Eine Verbindung zwischen dem Schutzgerät 20 und der Wandlereinrichtung 50 bleibt somit auch dann erhalten, wenn einer der beiden Übertragungszweige 100 oder 110 kurzzeitig unterbrochen wird.

Nach dem Anschließen der Testeinrichtung 70 an den Übertragungsring 40 werden Testsequenzen bzw. Testtelegrammsequenzen von der Testeinrichtung 70 erzeugt und über den Datenübertragungsring 40 zum Schutzgerät 20 übertragen.

Um nun zu ermöglichen, dass das Schutzgerät 20 seiner Schutzfunktion auch während eines solchen Gerätetests unterbrechungsfrei gerecht werden kann, ist das Schutzgerät 20 gemäß Figur 1 derart ausgestaltet, dass es für einen Gerätetest eine Kopie seiner Schutzgeräteapplikation anfertigt und als Applikationskopie zur Verfügung steht. Aufgrund des Vorhandenseins dieser Applikationskopie ist es möglich, das Schutzgerät 20 sowohl im normalen Schutzgerätebetrieb - nachfolgend auch Normalbetrieb genannt - zu betreiben als auch parallel dazu zu testen. Dieser Testbetrieb kann beispielsweise auf der Basis der Applikationskopie durchgeführt werden, da die Applikationskopie eine vorzugsweise 1:1-Kopie der Feldgeräteapplikation darstellt und somit mit dieser vorzugsweise identisch ist. Das Feldgerät 20 kann bei einem solchen Testmodus auf der Basis seiner Feldgeräteapplikation normal weiter betrieben werden und die Wandlerdaten der Wandlereinrichtung 50 weiter verarbeiten.

Alternativ ist es möglich, den Normalbetrieb des Schutzgeräts 20 auf der Basis der Applikationskopie aufrechtzuerhalten und die Daten der Wandlereinrichtung 50 mit Hilfe der Applikationskopie im Schutzgerät 20 weiter zu verarbeiten; bei dieser Vorgehensweise erfolgt der Gerätetest also auf der Basis der ursprünglichen Feldgeräteapplikation.

Darüber hinaus ist es auch möglich, sowohl die Feldgeräteapplikation als auch die Applikationskopie zu testen; ein solcher Kompletttest kann dabei derart durchgeführt werden, dass zunächst die Feldgeräteapplikation und anschließend die Applikationskopie - oder umgekehrt - getestet wird; alternativ kann stattdessen ein "paralleler" Test erfolgen. Ein solcher paralleler Test lässt sich beispielsweise durchführen, indem regelmäßig zwischen der Feldgeräteapplikation und der Applikationskopie hin- und hergeschaltet wird, so dass die Feldgeräteapplikation und die Applikationskopie abwechselnd in Teilen getestet werden und der Normalbetrieb in entsprechend versetzter Weise abwechselnd auf der Basis der Applikationskopie und der Feldgeräteapplikation erfolgt.

In entsprechender Weise kann auch das Feldleitgerät 30 mit der Testeinrichtung 70 getestet werden.

Der Datenübertragungsring 40 arbeitet vorzugsweise auf der Basis von Kommunikationsprotokollen nach dem Standard IEC61850, vorzugsweise basierend auf dem Real-Time-Ethernet-Standardentwurf IEC61784.2 oder ähnlichen Normentwürfen auf der Basis einer optischen Datenübertragung.

Die Wandlereinrichtung 50 kann beispielsweise durch eine Wandlerelektronikeinheit gebildet sein, die sekundäre Strom- und Spannungswandler umfasst und/oder Strom- und Spannungsmesswerte in Form digitaler Daten weiterverarbeitet. Zur Übertragung der von der Wandlereinrichtung 50 erzeugten digitalen Wandlerdaten zu dem Schutzgerät 20 bzw. dem Feldleitgerät 30 werden diese auf Real-Time-Ethernet-Kanäle abgebildet und über den Datenübertragungsring 40 zu dem Schutzgerät 20 bzw. dem Feldleitgerät 30 übertragen. Der Datenübertragungsring 40 bildet vorzugsweise ein redundantes, deterministisches und echtzeitfähiges Kommunikationssystem, so dass eine Unterbrechung des Kommunikationsringes nicht zu einem Ausfall der Schutzfunktion des Schutzgerätes 20 bzw. des Feldleitgerätes 30 führen kann.

In der Figur 2 ist ein zweites Ausführungsbeispiel für eine Anordnung dargestellt. Man erkennt ein Schutzgerät 20, ein Feldleitgerät 30 sowie eine Wandlereinrichtung 50, die über einen Datenübertragungsring 40 miteinander in Verbindung stehen. Im Unterschied zu dem ersten Ausführungsbeispiel gemäß Figur 1 wird die Testeinrichtung 70 nicht über den Ethernet-Schalter 60 an den Datenübertragungsring 40 angeschlossen, sondern durch ein Auftrennen des Übertragungszweiges 110 und ein Dazwischenschalten der Testeinrichtung 70. Der Übertragungszweig 110 wird dabei kurzzeitig unterbrochen, damit die Testeinrichtung 70 in den Datenübertragungsring 40 integriert werden kann. Zu einer Unterbrechung der Datenübertragung zwischen dem Schutzgerät 20, dem Feldleitgerät 30 sowie der Wandlereinrichtung 50 kommt es dabei jedoch nicht, da der Übertragungszweig 100 ununterbrochen weiter zur Verfügung steht.

Der Ethernet-Schalter 60 kann in diesem Fall zum Anschluss anderer Geräte verwendet werden; alternativ kann der Ethernet-Schalter 60 auch eingespart werden, wenn er zum Anschluss weiterer Komponenten nicht benötigt wird.

In der Figur 3 ist ein drittes Ausführungsbeispiel für eine Anordnung dargestellt. Man erkennt wiederum einen Datenübertragungsring 40, an dem ein Schutzgerät 20, ein Feldleitgerät 30 sowie eine Wandlereinrichtung 50 angeschlossen sind. Zum Testen des Schutzgerätes 20 bzw. des Feldleitgerätes 30 ist eine Testeinrichtung 70 innerhalb der Wandlereinrichtung 50 integriert und bildet einen integralen Bestandteil der Wandlerelektronik der Wandlereinrichtung 50. Die Wandlereinrichtung 50 ist somit in der Lage, Testsequenzen zum Schutzgerät 20 bzw. zum Feldleitgerät 30 zu übertragen, um dieses zu testen. Auch beim Ausführungsbeispiel gemäß Figur 3 kann der Ethernet-Schalter 60 zum Anschluss weiterer Komponenten herangezogen oder weggelassen werden.

Das Schutzgerät 20 und das Feldleitgerät 30 enthalten vorzugsweise jeweils eine Mikroprozessoreinrichtung mit einem Speicher, in dem eine von der Mikroprozessoreinrichtung angefertigte Applikationskopie der Feldgeräteapplikation für den Gerätetest abgespeichert werden kann.

## Patentansprüche

1. Feldgerät (20, 30), das zum Durchführen eines Gerätetests mit einer Testeinrichtung (70) verbindbar ist,
**dadurch gekennzeichnet, dass** das Feldgerät derart ausgestaltet ist, dass es für einen Gerätetest eine Kopie seiner Feldgeräteapplikation in Form einer Applikationskopie erzeugt und diese Applikationskopie in einem in dem Feldgerät (20, 30) enthaltenen Speicher abspeichert und dass während des Gerätetests der Feldgerätebetrieb weiterläuft.

2. Feldgerät (20, 30) nach Anspruch 1,
**dadurch gekennzeichnet, dass** das Feldgerät derart ausgestaltet ist, dass während des Gerätetests die Applikationskopie getestet werden kann.

3. Feldgerät (20, 30) nach Anspruch 1 oder 2,
**dadurch gekennzeichnet, dass** das Feldgerät derart ausgestaltet ist, dass während des Gerätetests die Feldgeräteapplikation getestet werden kann.

4. Feldgerät (20, 30) nach einem der Ansprüche 1 bis 3,
**dadurch gekennzeichnet, dass** das Feldgerät derart ausgestaltet ist, dass während des Gerätetests der Feldgerätebetrieb zeitweise auf der Basis der Feldgeräteapplikation und zeitweise auf der Basis der Applikationskopie erfolgt und dass während des Gerätetests sowohl die Feldgeräteapplikation als auch die Applikationskopie getestet werden.

5. Feldgerät nach einem der voranstehenden Ansprüche 1 bis 4,
**dadurch gekennzeichnet, dass** das Feldgerät derart ausgestaltet ist, dass während des Gerätetests der Feldgerätebetrieb unterbrechungsfrei weiterläuft.

6. Anordnung (10) mit zumindest einem Feldgerät (20, 30), insbesondere Schutzgerät, und mindestens einer mit dem zumindest einen Feldgerät (20, 30) in Verbindung stehenden Wandlereinrichtung (50), die zum Anschluss an eine Energieübertragungsleitung geeignet ist,
**dadurch gekennzeichnet, dass** das Feldgerät (20, 30) gemäß einem der voranstehenden Ansprüche 1 bis 5 ausgebildet ist und
das Feldgerät und die Wandlereinrichtung über einen geschlossenen Datenübertragungsring (40) verbunden sind.

7. Anordnung nach Anspruch 6,
**dadurch gekennzeichnet, dass** an den Datenübertragungsring eine zusätzliche Schalteinrichtung (60) angeschlossen ist, die als Schnittstelle zum Anschluss einer Testeinrichtung (70) zum Testen des Feldgeräts geeignet ist.

8. Anordnung nach einem der voranstehenden Ansprüche 6 und 7,
**dadurch gekennzeichnet, dass** die Schalteinrichtung durch einen Ethernet-Schalter, insbesondere einen 3-Port-Schalter gebildet ist.

9. Anordnung nach einem der voranstehenden Ansprüche 6 bis 8,
**dadurch gekennzeichnet, dass** in der Wandlereinrichtung eine Testeinrichtung zum Testen des Feldgerätes enthalten ist.

10. Verfahren zum Testen eines Feldgerätes (20, 30) einer Anordnung (10) nach einem der voranstehenden Ansprüche 6 bis 9,
**dadurch gekennzeichnet, dass** mit einer an den Datenübertragungsring (40) angeschlossenen Testeinrichtung (70) Testsequenzen erzeugt und über den Datenübertragungsring zu dem Feldgerät übertragen werden.

11. Verfahren nach Anspruch 10,
**dadurch gekennzeichnet, dass** während des Gerätetests die Applikationskopie getestet wird.

12. Verfahren nach Anspruch 11 oder 10,
**dadurch gekennzeichnet, dass** während des Gerätetests die Feldgeräteapplikation getestet wird.

13. Verfahren nach einem der voranstehenden Ansprüche 10 bis 12,
**dadurch gekennzeichnet, dass** während des Gerätetests der Feldgerätebetrieb zeitweise auf der Basis der Feldgeräteapplikation und zeitweise auf der Basis der Applikationskopie erfolgt und dass während des Gerätetests sowohl die Feldgeräteapplikation als auch die Applikationskopie getestet werden.

14. Verfahren nach einem der voranstehenden Ansprüche 10 bis 13, **dadurch gekennzeichnet, dass** während des Gerätetests der Feldgerätebetrieb unterbrechungsfrei weiterläuft.

15. Verfahren nach einem der voranstehenden Ansprüche 10 bis 14,
**dadurch gekennzeichnet, dass** das Feldgerät (20, 30) während seines Betriebs getestet wird, indem für den Testbetrieb oder den Gerätebetrieb auf die Applikationskopie zurückgegriffen wird.

## Claims

1. Field device (20, 30), which can be connected to a test device (70) for performing a device test **characterized in that** the field device is designed such that, for a device test, it produces a copy of its field device application in the form of an application copy and stores this application copy in a memory contained in the field device (20, 30), and **in that** the field device continues to operate during the device test.

2. Field device (20, 30) according to Claim 1, **characterized in that** the field device is designed such that the application copy can be tested during the device test.

3. Field device (20, 30) according to Claim 1 or 2, **characterized in that** the field device is designed such that the field device application can be tested during the device test.

4. Field device (20, 30) according to one of Claims 1 to 3, **characterized in that** the field device is designed such that, during the device test, the field device is operated on the basis of the field device application at times and on the basis of the application copy at times, and **in that** both the field device application and the application copy are tested during the device test.

5. Field device according to one of the preceding Claims 1 to 4, **characterized in that** the field device is designed such that the field device continues to operate without interruption during the device test.

6. Arrangement (10) having at least one field device (20, 30), in particular a protective device and having at least one converter device (50) which is connected to the at least one field device (20, 30) and is suitable for connection to a power transmission line, **characterized in that** the field device (20, 30) is configured according to one of the preceding Claims 1 to 5 and the field device and the converter device are connected via a closed data transmission ring (40).

7. Arrangement according to Claim 6, **characterized in that** an additional switching device (60) is connected to the data transmission ring and is suitable for use as an interface for connection of a test device (70) for testing the field device.

8. Arrangement according to either of the preceding Claims 6 and 7, **characterized in that** the switching device is formed by an Ethernet switch, in particular a 3-port switch.

9. Arrangement according to one of the preceding Claims 6 to 8, **characterized in that** the converter device contains a test device for testing the field device.

10. Method for testing a field device (20, 30) of an arrangement (10) according to one of the preceding Claims 6 to 9, **characterized in that** a test device (70) which is connected to the data transmission ring (40) produces test sequences which are transmitted via the data transmission ring to the field device.

11. Method according to Claim 10, **characterized in that** the application copy is tested during the device test.

12. Method according to Claim 11 or 10, **characterized in that** the field device application is tested during the device test.

13. Method according to one of the preceding Claims 10 to 12, **characterized in that**, during the device test, the field device is operated on the basis of the field device application at times and on the basis of the application copy at times, and **in that** both the field device application and the application copy are tested during the device test.

14. Method according to one of the preceding Claims 10 to 13, **characterized in that** the field device continues to operate without interruption during the device test.

15. Method according to one of the preceding Claims 10 to 14, **characterized in that** the field device (20, 30) is tested while it is operating by accessing an application copy for the test operation or the device operation.

## Revendications

1. Appareil ( 20, 30 ) de terrain qui, pour effectuer un test de l'appareil, peut être relié à un dispositif ( 70 ) de test,
**caractérisé en ce que**
l'appareil de terrain est tel qu'il produit, pour un test d'appareil, une copie de son application d'appareil de terrain sous la forme d'une copie d'application et mémorise cette copie d'application dans une mémoire contenue dans l'appareil ( 20, 30 ) de terrain, et **en ce que**, pendant le test de l'appareil, le fonctionnement de l'appareil de terrain continue.

2. Appareil ( 20, 30 ) de terrain suivant la revendication 1,
**caractérisé en ce que**
l'appareil de terrain est tel que la copie d'application peut être testée pendant le test de l'appareil.

3. Appareil ( 20, 30 ) de terrain suivant la revendication 1 ou 2,
**caractérisé en ce que**
l'appareil de terrain est tel que l'application de l'appareil de terrain peut être testée pendant le test de l'appareil.

4. Appareil (20, 30) de terrain suivant l'une des revendications 1 à 3,
**caractérisé en ce que**
l'appareil de terrain est tel que, pendant le test de l'appareil, le fonctionnement de l'appareil de terrain a lieu de temps en temps sur la base de l'application de l'appareil de terrain et de temps en temps sur la base de la copie d'application, et **en ce que**, pendant le test de l'appareil, à la fois l'application de l'appareil de terrain et la copie de d'application sont testées.

5. Appareil ( 20, 30 ) de terrain suivant l'une des revendications précédentes 1 à 4,
**caractérisé en ce que**
l'appareil de terrain est tel que, pendant le test de l'appareil, le fonctionnement de l'appareil de terrain continue sans interruption.

6. Dispositif ( 10 ) comprenant au moins un appareil ( 20, 30 ) de terrain, notamment un appareil de protection, et au moins un transformateur ( 50 ) en liaison avec le au moins un appareil ( 20, 30 ) de terrain et propre au raccordement à une ligne de transmission d'énergie,
**caractérisé en ce que**
l'appareil ( 20, 30 ) de terrain est constitué suivant l'une des revendications précédentes 1 à 5 et
l'appareil de terrain et le transformateur sont reliés par un anneau ( 40 ) fermé de transmission de données.

7. Dispositif suivant la revendication 6,
**caractérisé en ce que**
à l'anneau de transmission de données est raccordé un dispositif ( 60 ) supplémentaire de commutation, qui est approprié comme interface, pour le raccordement d'un dispositif ( 70 ) de test pour tester l'appareil de terrain.

8. Dispositif suivant l'une des revendications précédentes 6 et 7,
**caractérisé en ce que**
le dispositif de commutation est formé par un commutateur Ethernet, notamment par un commutateur à 3 accès.

9. Dispositif suivant l'une des revendications précédentes 6 à 8,
**caractérisé en ce qu'**un dispositif de test, pour tester l'appareil de terrain, est contenu dans le transformateur.

10. Procédé de test d'un appareil ( 20, 30 ) de terrain d'un dispositif ( 10 ) suivant l'une des revendications précédentes 6 à 9,
**caractérisé en ce que**
l'on produit des séquences de test par un dispositif ( 70 ) de test raccordé à l'anneau ( 40 ) de transmission de données et on les transmet à l'appareil de terrain par l'anneau de transmission de données.

11. Procédé suivant la revendication 10,
**caractérisé en ce**
**qu'**on teste la copie d'application pendant le test de l'appareil.

12. Procédé suivant la revendication 11 ou 10,
**caractérisé en ce qu'**on teste l'application de l'appareil de terrain pendant le test de l'appareil.

13. Procédé suivant l'une des revendications précédentes 10 à 12,
**caractérisé en ce que**
pendant le test de l'appareil, le fonctionnement de l'appareil de terrain s'effectue de temps en temps sur la base de l'application de l'appareil de terrain et de temps en temps sur la base de la copie d'application et **en ce que**, pendant le test de l'appareil, on teste à la fois l'application de l'application de l'appareil de terrain et la copie d'application.

14. Procédé suivant l'une des revendications précédentes 10 à 13,
**caractérisé en ce que**
pendant le test de l'appareil, le fonctionnement de l'appareil de terrain continue sans interruption.

15. Procédé suivant l'une des revendications précédentes 10 à 14,
**caractérisé en ce qu'**on teste l'appareil ( 20, 30 ) de terrain pendant son fonctionnement en se reportant pour le fonctionnement de test ou pour le fonctionnement de l'appareil à la copie d'application.
